# EUROPÄISCHE PATENTSCHRIFT

(11) **EP 1 069 403 B1**
(45) Veröffentlichungstag und Bekanntmachung des Hinweises auf die Patenterteilung: **13.05.2015**
(21) Anmeldenummer: 00115354.3
(22) Anmeldetag: 14.07.2000
(51) Int. Cl.: G01C 21/36

(54) **Verfahren zur grafischen Darstellung einer vorausliegenden Strasse**
Method for displaying the image of a route ahead
Procédé pour représenter graphiquement une route à venir

(30) Priorität: 16.07.1999 DE 19933503
(43) Veröffentlichungstag der Anmeldung: 17.01.2001
(73) Patentinhaber: Bayerische Motoren Werke Aktiengesellschaft, 80809 München (DE)
(72) Erfinder: Haenel, Klaus-Steffen, 80638 München (DE)

(56) Entgegenhaltungen:
- EP-A- 0 762 361
- DE-A- 19 600 700
- DE-A- 19 738 764
- PATENT ABSTRACTS OF JAPAN vol. 1996, no. 02, 29. Februar 1996 (1996-02-29) -& JP 07 257228 A (NISSAN MOTOR CO LTD), 9. Oktober 1995 (1995-10-09)

## Beschreibung

Die Erfindung betrifft ein Verfahren zur grafischen Darstellung einer vorausliegenden Strasse in der mittleren örtlichen Strassenrichtung, insbesondere in einem Nahbereich.

Häufig ist eine direkte Sicht des Fahrers auf den vorausliegenden Strassenverlauf behindert. Beispiele hierfür sind Fahrten bei Dunkelheit, Nebel oder Schneetreiben oder auf Strecken mit Gefälle, in Steilgelände eingebettete Kurven oder in der Kolonne hinter Großfahrzeugen. In diesen Situationen bestehen hohe Anforderungen an die Aufmerksamkeit des Fahrers und die Durchführung von Handlungen, einerseits zur Stabilisierung, andererseits zur Verfolgung der optimalen Trajektorie und der Durchführung von Manövern. Fehlende Sicht in Verbindung mit fehlender Ortskenntnis führt hier zu einer erheblichen Steigerung der Fahrerbelastung, zu erhöhtem Risiko und zu Unsicherheit in der Fahrzeugführung.

Zur Vermeidung der vorgenannten Probleme sind Verfahren zur Strassenvisualisierung auf einem im Instrumentenbrett des Fahrzeugs angeordneten Fahrerbildschirm an sich bekannt.

Beispielsweise geht aus der EP-A-0762 361 der Vorschlag hervor, aus dem Strassenverlauf eine geglättete Linie zu berechnen. Einzelheiten hierzu ergeben sich aus dem Dokument aber nicht.

Bei einer Vorrichtung gemäß der DE 19738764 A wird ein vorausliegender zu durchfahrender Strassenverlauf aus einer Strassendatenbasis und aus Navigationsdaten berechnet und fortlaufend in einem Bildfeld auf dem Fahrerbildschirm mit verschiedenen für die Fahrzeugführung wichtigen Objekten, wie beispielsweise Ansätzen der Nebenstrassen bei Kreuzungen, Hindernissen auf der Fahrbahn und virtuellen Leitplanken, jedoch ohne eine umfangreiche kartografische Umgebung dargestellt.

Der Fahrer kann diese Information mit kurzer Blickzuwendung zum Fahrerbildschirm erfassen und wird in Fahrsituatiuonen, in denen er einerseits seine Aufmerksamkeit in hohem Maße der realen Fahrszene widmen muß und wobei er andererseits auf eine derartige Information angewiesen ist, nicht abgelenkt.

Die Straßendarstellung ist in verschiedenen Ausführungsvarianten möglich.

In einer ersten Ausführungsvariante wird der Straßenverlauf perspektivisch dargestellt (auch Aerial View, Bird View genannt). Für diese Darstellung wird aus ergonomischen Gründen eine annähernde Übereinstimmung mit der tatsächlichen Ansicht des Fahrraumes hergestellt. Demzufolge ist eine Darstellung vom momentanen Ort des Fahrzeugs aus in Fahrtrichtung unumgänglich, und der Nachteil einer eingeschränkten Übersicht bei vorausliegender starker Richtungsänderung muß in Kauf genommen werden. Dieser Nachteil wird durch Vorteile der perspektivischen Darstellung, wie Vermittlung des Raumgefühls, plausible Staffelung einer weit vorausreichenden Darstellung, und Hervorhebung von Kurven durch Stauchung der Darstellung aufgewogen. Der Ort und die Fahrtrichtung sind aus Navigationsdaten bekannt, so daß die perspektivische Darstellung mit einem computergraphischen Transformationssystem direkt aus der digitalen Karte gewonnen wird.

In einer zweiten Ausführungsvariante erfolgt die Darstellung wie aus senkrechter Sicht von oben (auch Map View genannt), vergleichbar mit einer Wegverlaufs-Skizze. Dabei ist die Darstellung ebenfalls in Fahrtrichtung orientiert. Diese Darstellungsweise erschwert, wie bereits beschrieben, vor einer Kurve oder Abbiegung die Übersicht über den vorausliegenden Straßenverlauf.

In der oben genannten Offenlegungsschrift wird vorgeschlagen, die Orientierung der Bildfeld-Vertikalen in der mittleren Richtung des zu durchfahrenden Straßenverlaufs zu wählen. Ein Verfahren zur Berechnung dieser mittleren Richtung wird jedoch nicht angegeben.

Der Erfindung liegt die Aufgabe zugrunde, ein Verfahren der eingangs genannten Art zu schaffen, mit dem auf einfache Weise die mittlere Richtung des zu durchfahrenden Straßenverlaufs bestimmt werden kann, wobei folgende Anforderungen erfüllt werden müssen:

Die mittlere Richtung muß dem Fahrergefühl entsprechen und insoweit plausibel sein. Es ist die Richtung, in die ein Fahrer einen Kartenausschnitt drehen würde, wenn er einen Abschnitt seiner Fahrtroute in Vorausrichtung (Heading Up) überblicken will.

Die Abfolge der mittleren Richtungen darf keine Sprünge enthalten, so daß sich insgesamt eine ruhige Abfolge der Darstellungs-Orientierung ergibt.

Die mittlere Richtung muß fortlaufend für jeden neuen Fahrzeugort zur Verfügung stehen, so daß die Orientierung der Darstellung während der Fahrt kontinuierlich erfolgt.

Die mittlere Richtung muß dem im Bildfeld dargestellten Entfernungsbereich angepaßt sein, so daß sich bei kurvigem Straßenverlauf möglicherweise unterschiedliche mittlere Richtungen für einen gewählten kleinen oder einen gewählten großen Entfernungsbereich ergeben.

Die Erfindung löst diese Aufgabe mit den Merkmalen des Patentanspruchs 1.

Wenn sich das Fahrzeug auf einem bestimmten Bahnpunkt befindet, so wird als Bildorientierung, d. h. als Richtung der Bild-Vertikale die Richtung der Führungslinie im zugeordneten Führungslinienpunkt verwendet.

Der Bildfeld-Mittelpunkt oder ein anderer zweckmäßiger Bezugspunkt des Bildfeldes, beispielsweise ein Punkt der Bildfeld-Vertikale unterhalb des Bildfeld-Mittelpunktes, liegt im zugeordneten Führungslinienpunkt und bestimmt die Bildposition.

Die Bildposition und die Bildrichtung werden auf diese Weise anhand der Führungslinie ständig entsprechend der Fahrt des Fahrzeugs mitgeführt.

Die Führungslinie besitzt auch die Voraussetzungen zur sequenzierten Darstellung, die bereits in der genannten Offenlegungsschrift beschrieben ist.

Zu diesem Zweck wird das Bild an einem Führungslinienpunkt festgehalten, bis das Fahrzeug einen bestimmten vorausliegenden Bahnpunkt erreicht hat. Sodann wird das Bild mit erhöhter Geschwindigkeit auf der Führungslinie bis zu dem vorausliegenden Führungslinienpunkt nachgeführt, der dem vorausliegenden, vom Fahrzeug erreichten Bahnpunkt entspricht.

In der Erfindung wird ein zweistufiges Verfahren zur Entwicklung der Führungslinie angewandt.

Dabei werden in der ersten Stufe zwischen den in der Straßen-Datenbasis niedergelegten Punkten des zu durchfahrenden Straßenverlaufs äquidistante Punkte durch Interpolation vorzugsweise geradlinig aufgereiht. Diese äquidistanten Punkte werden als Bahnpunkte verwendet.

Dabei ist eine ggf. auftretende geringfügige lokale Abweichung von der äquidistanten Teilung für das Verfahren ohne Bedeutung.

Der Abstand dieser Bahnpunkte ist vorteilhafterweise so klein bemessen, daß eine Bewegung des Fahrzeugs von Bahnpunkt zu Bahnpunkt eine annähernd kontinuierliche Bewegung darstellt.

In der zweiten Stufe wird eine Glättungsoperation auf die Bahnpunkte angewandt. Die Glättungsoperation erstreckt sich jeweils über einen aktuellen und die in einem bestimmten Bereich voraus- und rückliegenden Bahnpunkte. Aus diesen Bahnpunkten wird ein Punkt einer geglätteten Linie, das ist der aktuelle Führungslinienpunkt, berechnet.

Der aktuelle Bahnpunkt und der zugeordnete aktuelle Führungslinienpunkt besitzen eine feste gegenseitige Zuordnung.

Die Glättungsoperation besteht vorzugsweise in der Berechnung des Schwerpunkts aus dem aktuellen Bahnpunkt und den in einem bestimmten Bereich voraus- und rückliegenden Bahnpunkten, wobei diese Bahnpunkte gleiche Gewichte besitzen können, und wobei dieser Schwerpunkt als ein dem aktuellen Bahnpunkt zugeordneter Punkt der Führungslinie verwendet wird.

In einer weiteren erfindungsgemäßen Ausführung besitzen die in die Schwerpunktberechnung einbezogenen Bahnpunkte unterschiedliche Gewichte.

Eine weitere erfindungsgemäße Ausführung verwendet eine Sehne zur Glättung des Straßenverlaufs. Zu diesem Zweck wird zwischen zwei Stützstellen, nämlich von einem zum aktuellen Bahnpunkt rückliegenden Punkt zu einem vorausliegenden Bahnpunkt eine Sehne aufgespannt.

Die Bildrichtung stimmt bei dieser Ausführung mit der Richtung dieser Sehne überein.

Der Bildfeld-Mittelpunkt oder ein anderer zweckmäßiger Bezugspunkt des Bildfeldes, beispielsweise ein Punkt der Bildfeld-Vertikale unterhalb des Bildfeld-Mittelpunktes, liegt auf der Sehnenmitte oder auf einem Punkt im unteren Bereich der Sehne.

Die Sehne kann auch in der Weise aufgespannt werden, daß zunächst an den beiden Stützstellen zwei kurze Sehnen aufgespannt werden, und die richtungs- und positionsbestimmende Sehne sodann zwischen den Mittelpunkten der beiden kurzen Sehnen aufgespannt wird.

In einer weiteren erfindungsgemäßen Ausführung werden an sich bekannte interpolative Splines (beispielsweise Bezier Curves, B-Splines) zur Entwicklung einer glatten Führungslinie angewandt.

Anhand eines in den Zeichnungen dargestellten Ausführungsbeispiels ist die Erfindung näher erläutert.

Es zeigt
Fig. 1: die aktuellen Punkte einer Straßen-Datenbasis für einen bestimmten zu durchfahrenden Straßenverlauf.
Fig. 2: die interpolierten äquidistanten Bahnpunkte,
Fig. 3: den geglätteten Bahnverlauf in der Umgebung eines Bahnpunktes B,
Fig. 4: die orientierte Darstellung des Bildfeldes für den Punkt B.

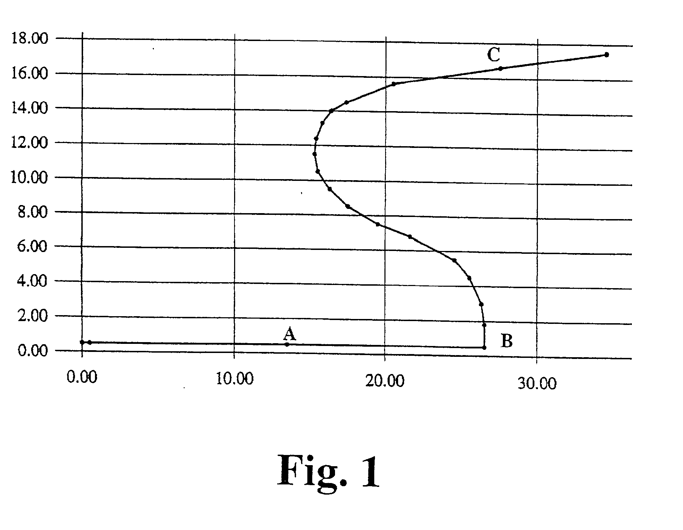

Die in Fig. 1 dargestellte Straße beginnt links unten und läuft über die Punkte A, B zum Punkt C.

Am Punkt B befindet sich eine Abbiegestelle um 90 Grad nach links, gefolgt von einer Links- und einer Rechtskurve. Die in unterschiedlicher Distanz liegenden Datenbasispunkte sind im Straßenverlauf als schwarze Punkte dargestellt.

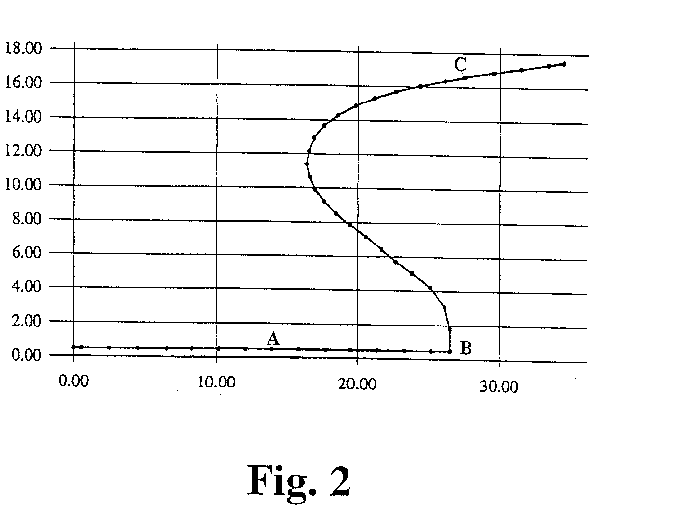

In Fig. 2 sind für die in Fig. 1 dargestellte Straße durch lineare Interpolation äquidistante Bahnpunkte berechnet und als schwarze Punkte dargestellt.

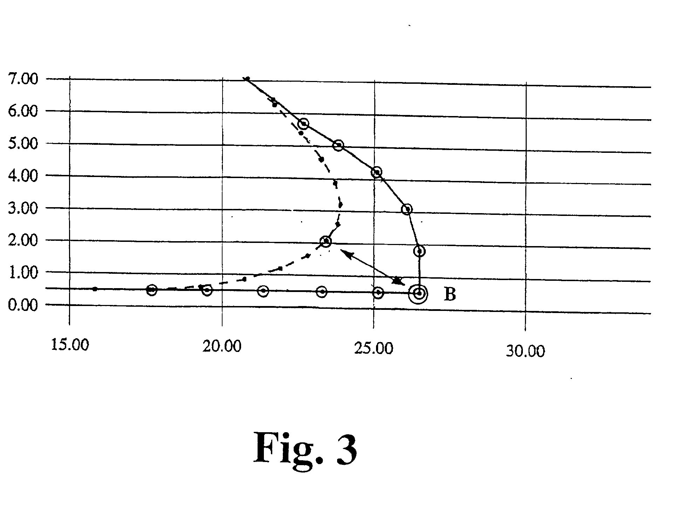

Die Fig. 3 zeigt in einem Ausschnitt von Fig. 2 die Bahnlinie der Straße in der Umgebung des Bahnpunktes B und die gestrichelt eingezeichnete Führungslinie im gleichen Bereich. Aus dem Bahnpunkt B und jeweils fünf voraus- und rückliegenden Bahnpunkten wurde jeweils der Schwerpunkt gewonnen, wobei die verwendeten Bahnpunkte als massegleiche Punkte betrachtet wurden.

Der Doppelpfeil zeigt auf den Bahnpunkt B und den zugehörenden Führungslinienpunkt.

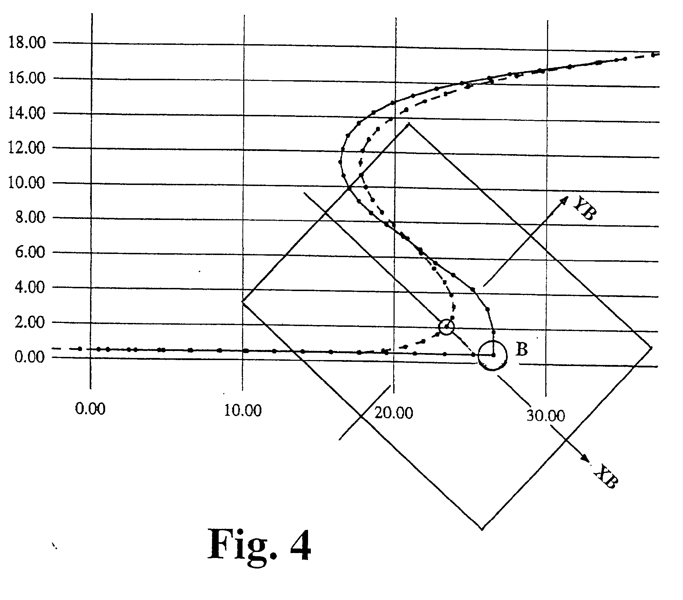

In Fig.4 ist das Bildfeld mit den Achsen XB, YB eingezeichnet, wobei die Bildfeld-Vertikale YB in der Richtung der Tangente der Führungslinie im jeweiligen Führungspunkt liegt. Der Ursprungspunkt des Bildfeldes befindet sich dabei als Positionspunkt im Führungspunkt.

Die Erfindung erfüllt vorteilhaft die Anforderungen an eine Berechnung der mittleren Richtung in folgender Weise:
Die Führungslinie schneidet die Kurven und Winkel des Straßenverlaufs mehr oder weniger ab und besitzt in sich eine verminderte Kurvigkeit.

Das Bildfeld enthält eine Darstellung des Straßenverlaufs in der mittleren örtlichen Richtung, und die Darstellung erfolgt ohne Sprünge.

Die Orientierung der Darstellung paßt sich während der Fahrt kontinuierlich an, denn für jeden Ort des Fahrzeugs ist ein entsprechender Führungspunkt vorhanden.

Durch Auswahl der Länge des voraus- und rückliegenden Bereichs der Bahnlinie, auf den die Glättungsoperation angewandt wird, ist die Glättung dem dargestellten Entfernungsbereich anpaßbar.

Aus dem Original-Straßenverlauf, wie er in der Straßen-Datenbasis gespeichert ist, wird für jeden während der Fahrt eingenommenen Ort des Fahrzeugs die mittlere Richtung des örtlichen Straßenverlaufs so berechnet, daß die beschriebenen Anforderungen an die Darstellung der mittleren Richtung in einem Bildfeld erfüllt werden.

## Patentansprüche

1. Verfahren zur grafischen Darstellung einer vorausliegenden Strasse in ihrer mittleren örtlichen Richtung,
**dadurch gekennzeichnet,**
**dass** aus der Linie des im folgenden Bahnlinie genannten Strassenverlaufs eine im folgenden Führungslinie genannte geglättete Linie berechnet wird, indem
• jedem Punkt der Bahnlinie ein Punkt der Führungslinie zugeordnet wird,
• die Führungslinienrichtung im jeweiligen Punkt der Führungslinie als mittlere örtliche Richtung des Strassenverlaufs zur Orientierung des Bildfelds und der Punkt auf der Führungslinie als Positionspunkt des Bildfeldes verwendet wird,
• zur Durchführung der Berechnung der mittleren örtlichen Richtung auf der Bahnlinie äquidistante Punkte als Bahnpunkte berechnet werden und
• ein Schwerpunkt aus dem aktuellen Bahnpunkt und einer bestimmten Anzahl der vor und hinter dem aktuellen Bahnpunkt liegenden Bahnpunkte berechnet und als ein dem aktuellen Bahnpunkt zugeordneter Punkt der Führungslinie verwendet wird

2. Verfahren nach Anspruch 1 **dadurch gekennzeichnet, dass** die zur Berechnung des Schwerpunkts verwendeten Bahnpunkte gleiche Gewichte besitzen.

3. Verfahren nach Anspruch 1, **dadurch gekennzeichnet, dass** die zur Berechnung des Schwerpunkts verwendeten Bahnpunkte unterschiedliche Gewichte besitzen.

4. Verfahren nach Anspruch 1, **dadurch gekennzeichnet, dass** eine Sehne zur Berechnung der geglätteten Linie in der Weise verwendet wird, dass die Sehne von einem dem aktuellen Bahnpunkt vorausliegenden zu einem vom aktuellen Bahnpunkt zurückliegenden Bahnpunkt aufgespannt wird, und die örtliche Richtung der geglätteten Linie, d.i. zugleich die Richtung der Bildfeld-Vertikale, mit der Sehnenrichtung übereinstimmt, und der Bildpositionspunkt mit der Sehnenmitte übereinstimmt.

5. Verfahren nach Anspruch 4, **dadurch gekennzeichnet, dass** am vorausliegenden und zurückliegenden Bahnpunkt zunächst je eine kurze Hilfssehne aufgespannt wird, und die richtungs- sowie positionsbestimmende Sehne zwischen den Mittelpunkten der Hilfssehnen aufgespannt wird.

## Claims

1. A method for graphically displaying a road ahead in its mean local direction, **characterised in that** a smoothed line called a guideline below is calculated from the line of the road course called the path line below, in which
• a point of the guideline is associated with each point of the path line,
• the guideline direction is used at the respective point of the guideline as a mean local direction of the road course to orient the image field and the point on the guideline is used as the positioning point of the image field,
• equidistant points are calculated as path points to carry out the calculation of the mean local direction on the path line and
• a focal point is calculated from the current path point and a specific number of path points located in front of and behind the current path point and is used as a point of the guideline associated with the current path point.

2. A method according to claim 1, **characterised in that** the path points used to calculate the focal point have the same weights.

3. A method according to claim 1, **characterised in that** the path points used to calculate the focal point have different weights.

4. A method according to claim 1, **characterised in that** a chord is used to calculate the smoothed line in such a way that the chord is spanned from a path point ahead of the current path point to a path point behind the current path point, and the local direction of the smoothed line, i.e. simultaneously the direction of the image field vertical, coincides with the chord direction, and the image position point coincides with the chord centre.

5. A method according to claim 4, **characterised in that** a respective short auxiliary chord is firstly spanned at the path point ahead and behind, and the chord determining the direction and the position is spanned between the centre points of the auxiliary chords.

## Revendications

1. Procédé de représentation graphique d'une route située en aval dans sa direction locale médiane,
**caractérisé en ce qu'**
à partir de la ligne du tracé de la route nommée ci-après ligne de trajectoire on calcule une ligne lissée nommée ci-après ligne de guidage de la manière suivante :
- à chaque point de la ligne de trajectoire on associe un point de la ligne de guidage,
- on utilise la direction de la ligne de guidage dans chacun des points de cette ligne de guidage en tant que direction locale médiane du tracé de la route pour orienter le champ d'image et le point sur la ligne de guidage comme point de position du champ d'image,
- pour effectuer le calcul de la direction locale médiane on calcule sur la ligne de trajectoire des points équidistants en tant que points de trajectoire, et
- on calcule un centre de gravité à partir du point de trajectoire actuel et d'un nombre prédéfini de points de trajectoire situés en amont et en aval du point de trajectoire actuel et on l'utilise en tant que point de la ligne de guidage associé au point de trajectoire actuel.

2. Procédé conforme à la revendication 1,
**caractérisé en ce que**
les points de trajectoire utilisés pour le calcul du centre de gravité ont le même poids.

3. Procédé conforme à la revendication 1,
**caractérisé en ce que**
les points de trajectoire utilisés pour le calcul du centre de gravité ont des poids différents.

4. Procédé conforme à la revendication 1,
**caractérisé en ce que**
l'on utilise une corde pour le calcul de la ligne lissée de sorte que cette corde s'étende entre un poids de trajectoire situé en amont du point de trajectoire actuel et un point de trajectoire situé en aval du point de trajectoire actuel, et l'on fait coïncider la direction locale de la ligne lissée c'est-à-dire en même temps la direction de la verticale au champ d'image avec la direction de la corde et le point de position d'image avec le centre de la corde.

5. Procédé conforme à la revendication 4,
**caractérisé en ce que**
l'on étend tout d'abord respectivement une courte corde auxiliaire sur le point de trajectoire amont et sur le point de trajectoire aval et l'on étend la corde déterminant la direction et à la position entre les centres des cordes auxiliaires.
